(19) Europäisches Patentamt
European Patent Office
Office européen des brevets

(11) **EP 3 644 151 B1**

(12) **EUROPÄISCHE PATENTSCHRIFT**

(45) Veröffentlichungstag und Bekanntmachung des Hinweises auf die Patenterteilung:
**25.11.2020 Patentblatt 2020/48**

(51) Int Cl.:
**G05B 19/4097** *(2006.01)* **G05B 19/4065** *(2006.01)*

(21) Anmeldenummer: **18201953.9**

(22) Anmeldetag: **23.10.2018**

(54) **VERFAHREN ZUR 3D-RADIUSKORREKTUR BEIM CNC-FRÄSEN SOWIE FRÄSMASCHINE DAZU**

METHOD FOR 3D RADIUS CORRECTION IN CNC MILLING AND MILLING MACHINE FOR SAME

PROCÉDÉ DE CORRECTION DE RAYON TRIDIMENSIONNELLE DANS UNE FRAISEUSE CNC AINSI QUE FRAISEUSE ASSOCIÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**29.04.2020 Patentblatt 2020/18**

(73) Patentinhaber: **Siemens Aktiengesellschaft 80333 München (DE)**

(72) Erfinder:
• **Schermann, Aleksandra 71229 Leonberg (DE)**
• **Spielmann, Ralf 70569 Stuttgart (DE)**

(56) Entgegenhaltungen:
**DE-A1- 10 330 828 US-A- 5 563 484**

**Beschreibung**

Die vorliegende Erfindung betrifft ein Verfahren zur 3D-Radiuskorrektur beim CNC-Fräsen. Die Erfindung betrifft weiterhin eine entsprechend ausgebildete Fräsmaschine.

Hohe Oberflächenqualität, Präzision und Geschwindigkeit ohne Nacharbeit sind Hauptziele beim Formenbau. Die Prozesskette CAD-CAM-PP-CNC ist dabei der typische Arbeitsablauf. Typisch für den Formenbau sind die Konstruktion und das Design von Freiformoberflächen, die als digitales Modell mit einem CAD-System erstellt werden. Ausgehend von dem digitalen Modell werden in einer CAM-Station die einzelnen Bearbeitungsschritte festgelegt und Bearbeitungsbahnen berechnet. Das Bearbeitungsprogramm wird schließlich in einem Postprozessor (PP) in einer allgemeinen oder standardisierten Sprache zu Bahnen der Bearbeitungswerkzeuge und Steuerungsbefehlen in der CNC-Maschine generiert. In der Regel wird die Bahn an der Werkzeugspitze im NC-Code ausgegeben. Im Werkzeugmaschinenumfeld werden also im CAD-CAM-PP-CNC-Prozess aus digitalen Modellen Bahnen erzeugt, die anschießend auf einer Werkzeugmaschine aus einem Rohteil ein Werkstück erzeugen, wenn die Bahnen mit einem im CAD-CAM-Prozess definierten Werkzeug abgefahren werden.

An der Werkzeugmaschine ist in der Realität häufig nicht genau das im CAD-CAM-Prozess definierte Werkzeug vorhanden, sondern es ist lediglich ein sehr ähnliches Werkzeug verfügbar. Ist beispielsweise im CAD-CAM-Prozess ein Fräser mit einem bestimmten Durchmesser, einer bestimmten Länge und einer bestimmten Schneidenlänge definiert und an der Werkzeugmaschine ist nur ein Fräser mit einem - wenn auch nur geringfügig - verringerten Durchmesser verfügbar, kann das Werkstück nicht gefertigt oder es kann nur mit Abstrichen an die Genauigkeit und die Oberflächengüte hergestellt werden.

Um dennoch das gewünschte Werkstück maßhaltig zu fertigen, gibt es in Werkzeugmaschinensteuerungen die Funktion einer 3D-Radiuskorrektur.

In dem Siemens-Handbuch "Fräsen mit SINUMERIK, Formenbau von 3- bis 5-Achsen Simultanfräsen", Ausgabe 09/2011, Dokbestnr. 6FC5095-0AB10-0AP2, sind Verfahren zu einer 3D-Radiuskorrektur für verschiedene Fräsmethoden beschrieben.

Die Funktion der 3D-Radiuskorrektur kompensiert dann beispielsweise einen kleineren Werkzeugradius, so dass die gewünschte Oberfläche erzeugt werden kann.

Bei der 3D-Radiuskorrektur beim Stirnfräsen, dort mit "CUT3DF" bezeichnet, muss neben der Angabe der Fräsergeometrie zusätzlich noch die Korrekturrichtung ermittelt werden. Die Korrekturrichtung wird im Fall des Stirnfräsens aus der Flächennormalen, aus der Werkzeugrichtung und aus der Werkzeuggeometrie berechnet.

Bei der 3D-Radiuskorrektur beim Umfangsfräsen, dort mit "CUT3DC" bezeichnet, erfolgt die Korrektur orthogonal zur Bahntangente und zur Werkzeugrichtung. Damit kann die Korrekturrichtung durch den Normalenvektor der Fläche im Eingriffspunkt des Werkzeugs am Werkstück beschrieben werden.

Des Weiteren ist dort unter der Bezeichnung "CUT3DCC" noch eine Werkzeugradiuskorrektur bei einem kombinierten Umfangs- und Stirnfräsen angegeben. Dabei wird die Hauptbearbeitungsfläche mittels Umfangsfräsen erzeugt, wobei die Flächennormale dieser Umfangsfräsen-Fläche immer orthogonal zur Werkzeugorientierung steht. Zur 3D-Radiuskorrektur wird lediglich die Flächennormale der Begrenzungsfläche, also der über Stirnfräsen zu bearbeitenden Fläche, der Werkzeugmaschinensteuerung über das NC-Programm mitgeteilt werden.

Wird bei einer Fräsbearbeitung eines Werkstücks, also wenn der Fräser die programmierte Bahn mit seiner Fräserspitze durchläuft, sowohl mit der Stirnseite als auch mit dem Umfang des Fräsers Material abgetragen, gibt es gleichzeitig zwei Bearbeitungsbahnen oder Fräsbahnen am Werkstück: die Bearbeitungsbahn oder Fräsbahn der Stirnfläche und die Bearbeitungsbahn oder Fräsbahn des Umfangs des Fräsers. Eine 3D-Radiuskorrektur kann jedoch jeweils nur für eine der Bearbeitungsbahnen oder Fräsbahnen erfolgen. Soll bei beiden Bearbeitungsbahnen oder Fräsbahnen eine 3D-Radiuskorrektur durchgeführt werden, muss diese für jede Bearbeitungsbahn oder Fräsbahn einzeln erfolgen, die Bearbeitung muss in eine Stirn- und Umfangsbearbeitung in einer beliebigen Reihenfolge aufgeteilt werden. Das Werkstück kann daher nicht gleichzeitig mit einer einzigen programmierten Fräserbahn mit der gewünschten Genauigkeit an den beiden Bearbeitungsflächen gefertigt werden.

Aus der DE 103 30 828 A1 ist ein Verfahren zur Bestimmung des für die 3D-Radiuskorrektur notwendigen Normalenvektors ist bekannt. Auf Grundlage dieses Normalenvektors, der für jeden Stützpunkt vorliegt, kann eine 3D-Radiuskorrektur durchgeführt werden.

Der Erfindung liegt die Aufgabe zugrunde, ein Verfahren zum CNC-Fräsen mit einer 3D-Radiuskorrektur bei einer gleichzeitigen Bearbeitung mit Stirn- und Umfangsfräsen anzugeben.

Der Erfindung liegt weiterhin die Aufgabe zugrunde, eine CNC-Fräsmaschine anzugeben, die ausgebildet ist, eine 3D-Werkzeugkorrektur bei einer gleichzeitigen Bearbeitung mit Stirnund Umfangsfräsen durchzuführen.

Die erstgenannte Aufgabe wird durch ein Verfahren mit den Merkmalen des Anspruchs 1 gelöst. Danach umfasst das Verfahren zur 3D-Radiuskorrektur beim CNC-Fräsen die Schritte:

- mittels eines NC-Programms Vorgeben einer Fräserbahn auf einem Werkstück in Form von Positionen einer Fräserspitze, wobei die Fräserbahn für einen Original-Fräser zur Herstellung einer Oberflächenkontur auf dem Werkstück berechnet wurde,

- Vorgeben des Original-Fräsers einschließlich seiner Abmessungen, für den die Fräserbahn zur Erzeugung der Oberflächenkontur berechnet wurde,
- Vorgeben von Abmessungsdifferenzen eines tatsächlich vorhandenen Fräsers, mit dem die Bearbeitung des Werkstücks erfolgen kann, zum Original-Fräser,
- Vorgeben einer Flächennormalen einer Stirnfräsen-Fläche und einer Flächennormalen einer Umfangsfräsen-Fläche für jede Position der Fräserbahn,
- Vorgeben einer Fräserorientierung, die die räumliche Orientierung der Fräserachse angibt, für jede Position der Fräserbahn,
- für jede Position der Fräserbahn Bestimmen eines Korrekturvektors aus der Fräserorientierung und den Abmessungsdifferenzen des tatsächlich vorhandenen Fräsers und der Flächennormalen für Stirnfräsen und der Flächennormalen für Umfangsfräsen und
- Bearbeiten des Werkstücks zur Herstellung der Oberflächenkontur durch gleichzeitiges Stirn- und Umfangsfräsen beim Abfahren der vom NC-Programm vorgegebenen Fräserbahn mit dem tatsächlich vorhandenen Fräser unter Korrektur der Abmessungsdifferenzen mit dem Korrekturvektor.

Damit ist es möglich, mit einem simultanen Stirn- und Umfangsfräsen, das über eine einzige programmierte Fräserbahn erfolgt, auch dann genaue und qualitativ hochwertige Oberflächen herzustellen, wenn Abmessungsunterschiede zwischen dem im CAD-CAM-Prozess definierten Fräser und dem tatsächlich verfügbaren und verwendeten Fräser bestehen. Die Fräserbahn wird durch die nacheinander anzufahrenden Positionen der Fräserspitze definiert. Die Richtung der Flächennormalen der beiden gleichzeitig zu bearbeitenden Oberflächen wird ebenso wie die Fräserbahn und die Fräserorientierung der Steuerung der Fräsmaschine mittels des NC-Programms vom CAD-CAM-Prozess zur Verfügung gestellt. Der Original-Fräser einschließlich seiner Abmessungen wird der Steuerung beispielsweise über das NC-Programm vorgegeben.

Die vorliegende Erfindung kann auch als Stirnfräsen mit einer Begrenzungsfläche verstanden werden. Dabei braucht jedoch die Flächennormale für Stirnfräsen nicht wie beim Umfangsfräsen mit Begrenzungsfläche orthogonal zu der Werkzeugorientierung sein. Für das erfindungsgemäße Stirnfräsen mit Begrenzungsfläche werden für jeden Bearbeitungssatz zwei Flächennormalen vorgegeben, nämlich die Flächennormale für die Stirnfräsen-Fläche und die Flächennormale für die Umfangsfräsen-Fläche.

Vorteilhafte Ausgestaltungen des Verfahrens sind durch die Merkmale der Ansprüche 2 bis 5 gegeben.

Gemäß den Merkmalen des Anspruchs 2 wird ein erster Hilfs-Korrekturvektor aus der Fräserorientierung und den Abmessungsdifferenzen des tatsächlich vorhandenen Fräsers und der Flächennormalen für Stirnfräsen gebildet, wird ein zweiter Hilfs-Korrekturvektor aus der Fräserorientierung und den Abmessungsdifferenzen des tatsächlich vorhandenen Fräsers und der Flächennormalen für Umfangsfräsen gebildet und wird der Korrekturvektor wird über eine Vektoraddition aus dem ersten Hilfs-Korrekturvektor und dem zweiten Hilfs-Korrekturvektor bestimmt.

Damit werden zunächst für jede der Fräsbahnen Hilfs-Korrekturvektoren bestimmt, aus denen dann über eine Vektoraddition der bei der Simultanbearbeitung benötigte Korrekturvektor gebildet wird.

Die zweitgenannte Aufgabe wird durch die Merkmale des Anspruchs 6 gelöst. Danach umfasst eine numerisch gesteuerte Fräsmaschine eine Werkzeugmaschinensteuerung, die derart ausgebildet ist, eine 3D-Radius-Korrektur bei einer gleichzeitigen Fräsbearbeitung eines Werkstücks mittels Stirn- und Umfangsfräsen nach einem der Verfahrensansprüche durchzuführen. Die vorstehend beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1 in einem Übersichtsbild eine Prozesskette zur Erstellung von Freiformflächen im Formenbau,

FIG 2 ein Blockbild der wesentlichen Verfahrensschritte einer 3D-Radiuskorrektur bei gleichzeitigem Stirn- und Umfangsfräsen,

FIG 3 eine schematische Darstellung zur Bildung eines ersten Hilfs-Korrekturvektors für Stirnfräsen mit einem Kugelkopffräser,

FIG 4 eine schematische Darstellung der Bildung eines zweiten Hilfs-Korrekturvektors für Umfangsfräsen mit einem Kugelkopffräser,

FIG 5 eine schematische Darstellung zur Bildung eines ersten Hilfs-Korrekturvektors für Stirnfräsen mit einem Schaftfräser mit Eckenverrundung,

FIG 6 eine schematische Darstellung der Bildung eines zweiten Hilfs-Korrekturvektors für Umfangsfräsen mit einem Schaftfräser mit Eckenverrundung und

FIG 7 eine schematische Darstellung zur Bildung eines ersten Hilfs-Korrekturvektors für Stirnfräsen mit einem Schaftfräser mit Eckenverrundung, wobei der Umfangsradius und der Verrundungsradius korrigiert werden.

Vorbemerkung: In der folgenden Beschreibung und in den Figuren werden Vektoren verwendet, die jeweils für eine gerichtete Größe im Raum mit einem bestimmten Betrag stehen. In der folgenden Beschreibung sind die Vektoren zur Unterscheidung von den übrigen Größen kursiv und fett geschrieben, in den Figuren sind sie mit einem Pfeil gekennzeichnet.

Ebenfalls soll ausdrücklich darauf hingewiesen werden, dass das im Folgenden beschriebene Umfangsfräsen eine andere Funktionalität realisiert als das bekannte Umfangsfräsen mit Begrenzungsfläche, wie beispielsweise die über den SINUMERIK®-Befehl "CUT3DCC" zu aktivierenden Werkzeugradiuskorrektur. Im Unterschied zu den bekannten Radiuskorrekturen muss bei den im Folgenden beschriebenen Ausführungsbeispielen die Korrekturrichtung für die Umfangsfräsen-Fläche nicht orthogonal zur Werkzeugorientierung ausgerichtet sein. Dies ist zwar möglich, aber im Gegensatz zum Stand der Technik nicht zwingend erforderlich.

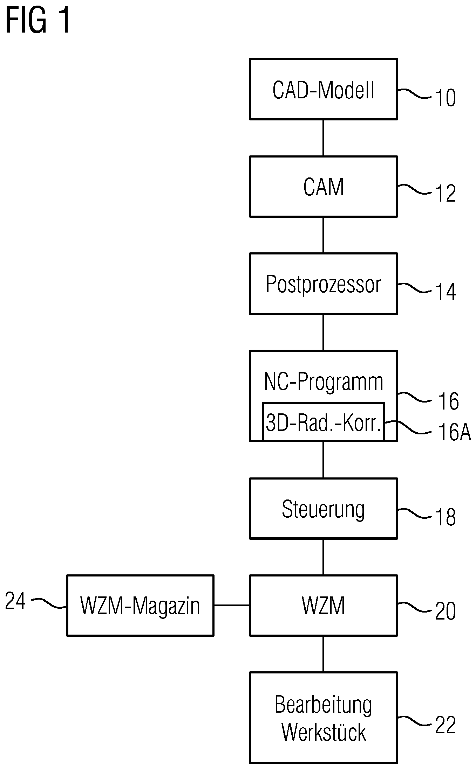

In FIG 1 ist eine Übersicht einer typischen Prozesskette für 5-Achs-Fräsen zur Erstellung von Freiformflächen im Formenbau. Am Beginn der Prozesskette stehen die Konstruktion und das Design eines CAD-Modells 10 eines herzustellenden Werkstücks, wobei das Werkstück im Wesentlichen über seine Oberflächenform beschrieben wird. Das CAD-Modell 10 wird dann einem CAM-System 12 übergeben. In dem CAM-System 12 wird die Bearbeitung für die unterschiedlichen Geometrien des Werkstücks mit den dazu geeigneten Strategien definiert zur Erzeugung der einzelnen Bearbeitungsschritte und Berechnung der Bahnen eines zu verwendenden Fräsers. In der Regel werden die Daten der Bearbeitungswerkzeuge aus Werkzeugdatenbanken ausgelesen. Nach einer Simulation der berechneten Werkzeugbahnen bzw. Maschinenbewegungen setzt ein Postprozessor 14 die Arbeitsschritte in ein entsprechendes NC-Programm 16 unter Berücksichtigung einer steuerungsspezifischen Syntax und von speziellen Steuerfunktionen um.

Aus den Anweisungen des NC-Programms 16 werden in einer Werkzeugmaschinensteuerung 18 die für eine konkrete Fräsmaschine 20 notwendigen Steuerbefehle zur Bearbeitung 22 der herzustellenden Werkstücks aufbereitet. Zur Bearbeitung stehen der Fräsmaschine 20 verschiedene Fräser zur Verfügung, die in einem Werkzeugmagazin 24 vorgehalten werden.

Da häufig an der Fräsmaschine 20 in der Realität nicht genau der im CAD-CAM-Prozess definierte Fräser vorhanden ist, gibt es im NC-Programm 16 Anweisungen 16A, mit denen eine 3D-Radiuskorrektur erfolgen kann, so dass das NC-Programm 16 in gewissen Grenzen unabhängig von den Abmessungen des tatsächlich verwendeten Fräsers ist.

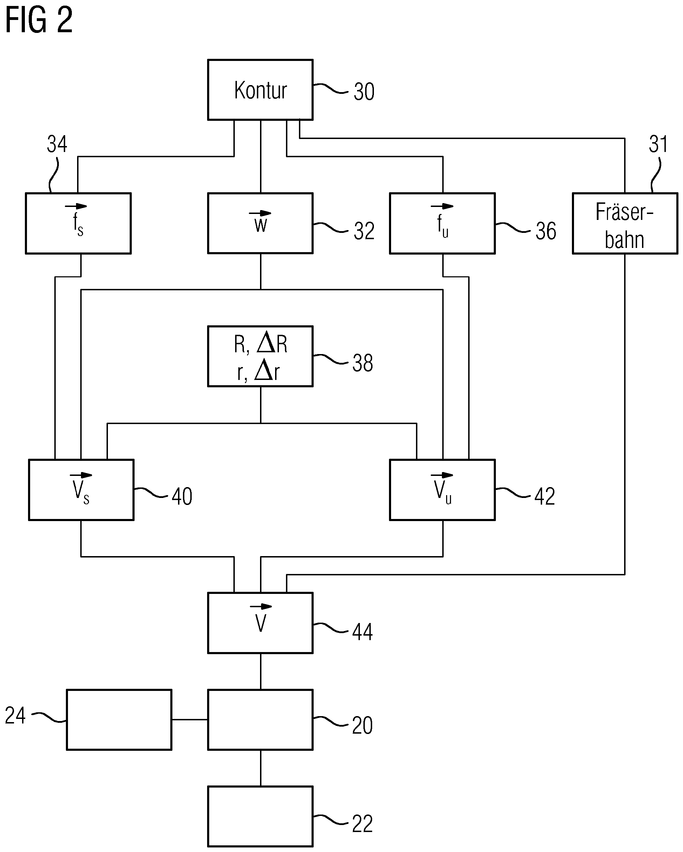

Ein Verfahren zur 3D-Radiuskorrektur bei einer gleichzeitigen Bearbeitung des Werkstücks mittels Stirn- und Umfangsfräsen soll im Folgenden anhand von FIG 2 erläutert werden. Durch die simultane Bearbeitung 22 des Werkstücks über zwei verschiedenen Berührpunkte des Fräsers an der Werkstückoberfläche oder über zwei verschiedene Fräsbahnen wird die zur Bearbeitung des Werkstücks benötigte Zeit entsprechend verkürzt. Dabei erfolgt eine Korrektur von Abmessungsunterschieden zwischen dem im CAD-CAM-Prozess definierten Fräser und dem tatsächlich für die Bearbeitung zur Verfügung stehenden Fräser sowohl beim Stirn- als auch beim Umfangsfräsen. Damit kann das Werkstück beim simultanen Stirn-Umfangsfräsen ohne Abstriche an die Genauigkeit und die Oberflächengüte mit dem zur Verfügung stehenden Fräser hergestellt werden, obwohl dieser nicht genau dem definierten Fräser entspricht.

In einem ersten Schritt 30 wird im CAM-Prozess 12 die für simultanes Stirn- und Umfangsfräsen des Werkstücks vorgesehene Kontur festgelegt. In Anwendung der im CAM-Prozess 12 hinterlegten Strategien und Methoden werden dann entsprechende Bearbeitungsbahnen berechnet.

Diese vorstehend angegebenen und weitere Informationen werden im Postprozessor 14 zu einem auf der Werkzeugmaschine 20 lauffähigen NC-Programm 16 aufbereitet. Es wird in einem ersten Verfahrensschritt eine Fräserbahn 31, beispielsweise eine Bahn an der Werkzeugspitze, vorliegend die Bahn der Fräserspitze oder des Tool Center Points (TCP), als NC-Code ausgegeben. Der NC-Code enthält in einem zweiten Verfahrensschritt 32 Informationen zur Werkzeugorientierung $w$ sowie in einem dritten Verfahrensschritt 34 zur Flächennormale $f_s$ der Stirnfräsen-Fräsbahn und in einem vierten Verfahrensschritt 36 zur Flächennormalen $f_u$ für die Umfangsfräsen-Fräsbahn.

Der folgende, stark vereinfachte Ausschnitt eines derartigen NC-Programms soll die Vorgabe der Werkzeugorientierung $w$ und der Flächennormalen $f_s$ und $f_u$ erläutern. Mit der Anweisung N260 wird angegeben, dass die nachfolgenden Anweisungen für eine 3D-Radiuskorrektur bei gleichzeitigem Stirn-Umfangsfräsen gelten. In den folgenden Anweisungen N280, N290, N300, usw. werden jeweils die Werkzeugorientierung $w$ über die Vektorkomponenten A3, B3, C3 und die Flächennormale $f_s$ über die Vektorkomponenten Ax, Bx, Cx und die Flächennormale $f_u$ über Vektorkomponenten Ay, By, Cy beschrieben. Diese Information zu den Flächennormalen $f_s$, $f_u$ ist hier nur wegen der besseren Sichtbarkeit fett wiedergegeben. Der Befehl "G41" im Satz N280 soll den ersten Satz oder den Beginn der Werkzeugradiuskorrektur bezeichnen.

.

.

N260 CUT3DFCD; "3D-WRK mit gleichzeitiger Stirn- und Umfangskorrektur"

N280 G01 X-20.505 Y7.541 Z45.047 A3=+.168277208 B3=+.054933772 C3=+.984207835 Ax=+1. Bx=-.000003008 Cx=+.000000718 Ay=+1 By=-0.0006 Cy=0.8888312 G41

N290 G01 X-20.506 Y7.365 Z45.047 A3=+.168631651 B3=+.053835903 C3=+.984207835 Ax=+1. Bx=+.000004199 Cx=+.000000719 Ay=+1 B6=-0.0006 Cy=0.8888312 N300 G01 X-20.507 Y7.194 Z45.047 A3=+.168973327 B3=+.052753699 C3=+.984207835 Ax=+1. Bx=-.000007571 Cx=+.000000721 Ay=+1 By=-0.0006 Cy=0.8888312

.

.

Falls der im CAD-CAM-Prozess definierte Fräser nicht im Werkzeugmagazin 24 vorhanden ist, sondern nur ein ähnliches Werkzeug mit etwas geringeren Abmessungen, besteht die Möglichkeit, dies über entsprechende Eingaben dem NC-Programm mitzuteilen. Dazu ist ein fünfter Verfahrensschritt 38 vorgesehen. Beispielsweise ist im CAD-CAM-Prozess ein Schaftfräser mit einem Durchmesser D = 30 mm, einer Länge von L = 150 mm und einer Schneidenlänge von FL = 50 mm definiert. An der Fräsmaschine 20 ist jedoch nur ein ähnliches Werkzeug mit einem geringeren Durchmesser von D = 29,9 mm vorhanden. Diese Abmessungen des verfügbaren Fräsers oder auch der Radiusunterschied von ΔR = 0,05 mm werden im fünften Verfahrensschritt 38 dem NC-Programm 16 mitgeteilt.

In einem sechsten Verfahrensschritt 40 wird nun ein erster Hilfs-Korrekturvektor $V_s$ bestimmt, der die für den definierten Fräser berechnete Fräserbahn für Stirnfräsen derart modifiziert, dass bei der Bearbeitung mit dem realen Fräser genau die vorgegebene erste Fräsbahn für Stirnfräsen abgefahren würde und so die gewünschte erste Teilkontur entstehen würde.

Analog zum sechsten Verfahrensschritt 40 wird in einem siebten Verfahrensschritt 42 ein zweiter Hilfs-Korrekturvektor $V_u$ bestimmt, der die für den definierten Fräser berechnete Fräserbahn für Umfangsfräsen derart modifiziert, dass bei der Bearbeitung mit dem realen Fräser genau die vorgegebene zweite Fräsbahn für Umfangsfräsen abgefahren würde und so die gewünschte zweite Teilkontur entstehen würde.

Die in den Verfahrensschritten 40 und 42 bestimmten ersten und zweiten Hilfs-Korrekturvektoren $V_s$ bzw. $V_u$ werden in einem achten Verfahrensschritt 44 vektoriell zu einem Korrekturvektor $V$ für simultanes Stirn-Umfangsfräsen addiert. Dieser Korrekturvektor $V$ modifiziert den Ort der Fräserspitze TCP derart, dass die gewünschte Werkstückgeometrie entsteht.

Auf der Basis der Anweisungen in dem NC-Programm 16 einschließlich des Korrekturvektors $V$ werden die für die Bearbeitung des Werkstücks erforderlichen Steuerbefehle für das simultane Stirn- und Umfangsfräsen bestimmt, wenn der tatsächlich zur Verfügung stehende Fräser gegenüber dem definierten Fräser Abmessungsunterschiede aufweist. Das bearbeitete Werkstück weist dabei eine ebenso hohe Qualität auf wie bei einer Herstellung mit dem definierten Fräser.

Falls bei der Aktivierung der 3D-Werkzeugradiuskorrektur "CUT3DFCD" einer der Normalenvektoren nicht vorhanden ist, beispielsweise durch eine fehlende Angabe, kommt ein Alarm und die Bearbeitung wird abgebrochen.

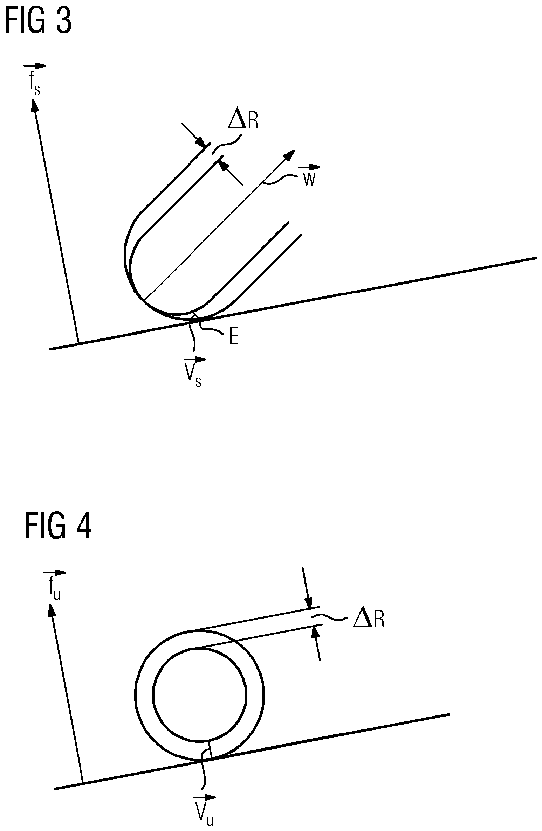

Bei der Verwendung eines Kugelfräsers für das simultane Stirn-Umfangsfräsen ergeben sich für die Stirnfräsbahn die in FIG 3 dargestellten Zusammenhänge. Der Radiusunterschied des Kugelkopfes des Fräsers ist mit ΔR bezeichnet, der Fräser bzw. seine Rotationsachse haben bei der Bearbeitung des Werkstücks die Orientierung $w$, und die Flächennormale der zu fräsenden Fläche entlang der Fräsbahn hat in jedem Stützpunkt den Wert $f_s$. Dann gilt für den ersten Korrekturvektor $V_s$ der Zusammenhang

$$V_s = (w - f_s) \cdot \Delta R.$$

FIG 4 verdeutlicht die Bestimmung des Hilfs-Korrekturvektors $V_u$ für Umfangsfräsen. Hier ist der Hilfs-Korrekturvektor $V_u$ unabhängig von der Fräserorientierung $w$. Die Flächennormale der zu fräsenden Fläche entlang der Fräsbahn für Umfangsfräsen hat in jedem Stützpunkt den Wert $f_u$. Es gilt der Zusammenhang

$$V_u = (- f_u) \cdot \Delta R.$$

Bei den FIG 3 und 4 ist zu beachten, dass die Abmessungsdifferenz von Original-Fräser zu dem tatsächlich vorhandenem Fräser aus Gründen der besseren Erkennbarkeit übertrieben groß dargestellt ist. Zudem zeigen die FIG 3 und 4 die Ausgangssituation bzw. Ursprungsposition des Fräsers, wie sie für den Original-Fräser zur Abarbeitung der Fräsbahnen berechnet wurde. Mit anderen Worten: In den FIG 3 und 4 ist die Position vor Anwendung der Werkzeugradiuskorrektur dargestellt. Zu erkennen ist in den FIG 3 und 4 weiterhin, dass die Fräserbahn korrigiert werden muss, damit die Fräsbahnen für Stirn- und Umfangsfräsen trotz geänderten Werkzeugs unverändert bleiben.

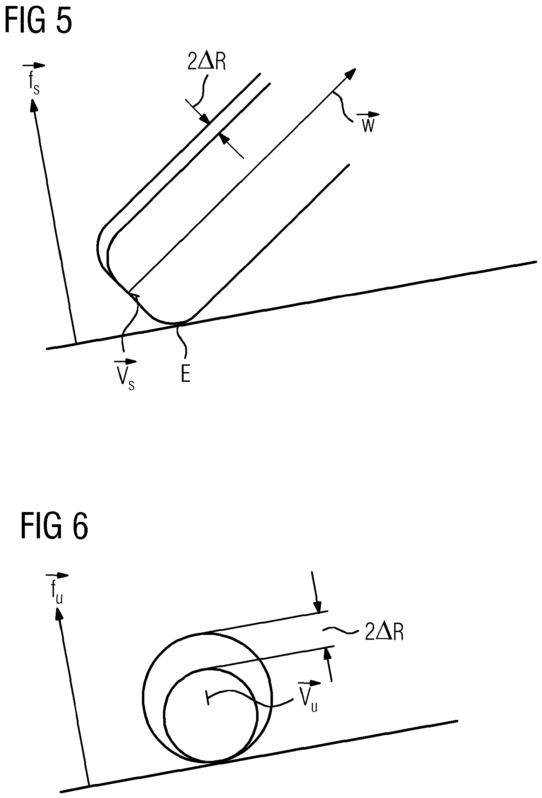

Etwas komplexer ist der Zusammenhang, wenn ein Schaftfräser mit Eckenverrundung verwendet wird mit einem gegenüber dem definierten Fräser geringeren Umfangsradius $\Delta R$, wobei der Verrundungsradius des verwendeten Fräsers gegenüber dem definierten Fräser unverändert ist. Dieser Fall kann auftreten, wenn der Verrundungsteil des Fräsers so nachgeschliffen wird, dass er gegenüber dem Original-Fräser unverändert bleibt, obwohl der Schaftradius R verkleinert wird. Anhand von FIG 5 soll dieser Fall erläutert werden. Auch hier ist der erste Hilfs-Korrekturvektor $V_s$ für Stirnfräsen abhängig von der Orientierung $w$ des Fräsers im Raum und der Flächennormalen $f_s$ der zu fräsenden Fläche in jedem Stützpunkt entlang der Fräsbahn. Hier wird der Hilfs-Korrekturvektor $V_s$ nach dem folgenden Zusammenhang bestimmt:

$$V_s \ = \ ((w \ \times \ f_s) \ \times \ w) \cdot \Delta R .$$

Dabei steht das Zeichen "$\times$" für die Bildung des Kreuzprodukts.

Der zweite Hilfs-Korrekturvektor $V_u$ für Umfangsfräsen hier wird ähnlich wie der zweite Hilfs-Korrekturvektor für Umfangsfräsen mit einem Kugelfräser bestimmt. Auch hier entspricht die Richtung des Hilfs-Korrekturvektors $V_u$ der Richtung der Flächennormalen -$f_u$:

$$V_u \ = \ (-f_u) \cdot \Delta R$$

FIG 6 veranschaulicht diesen Zusammenhang.

Bei den FIG 5 und 6 ist ebenfalls zu beachten, dass die Abmessungsdifferenz von Original-Fräser zu tatsächlich vorhandenem Fräser aus Gründen der besseren Erkennbarkeit übertrieben groß dargestellt ist. Zudem zeigen die FIG 5 und 6 die Position des Fräsers, wie sie nach der Werkzeugradiuskorrektur vom tatsächlich vorhandenen Fräser eingenommen wird. Die FIG 5 und 6 zeigen, dass die Fräserbahn derart korrigiert ist, dass die Fräsbahnen für Stirn- und Umfangsfräsen trotz eines geänderten Werkzeugs unverändert bleiben.

Wird ein Schaftfräser mit Eckenverrundung definiert und der reale Fräser differiert mit seinen Abmessungen sowohl im Schaftradius R mit $\Delta R$ als auch im Verrundungsradius r mit $\Delta r$ vom definierten Fräser, dann bestimmt sich der erste Hilfs-Korrekturvektor $V_s$ für simultanes Stirn- und Umfangsfräsen aus der Werkzeugorientierung $w$ und der Flächennormalen $f_s$ für Stirnfräsen und den Radiusdifferenzen $\Delta R$ und $\Delta r$ nach dem Zusammenhang

$$V_s \ = \ ((w \ \times \ f_s) \ \times \ w) \cdot (\Delta R \ - \ \Delta r) \ + \ (w \ - \ f_s) \cdot \Delta r .$$

Der zweite Hilfs-Korrekturvektor $V_u$ bestimmt sich aus der Flächennormalen $f_u$ für Umfangsfräsen und der Radiusdifferenz $\Delta R$ nach dem Zusammenhang

$$V_u \ = \ (-f_u) \cdot \Delta R .$$

Der Korrekturvektor $V$ wird aus dem ersten und zweiten Hilfs-Korrekturvektor $V_s$ bzw. $V_u$ über eine Vektoraddition nach dem Zusammenhang

$$V \ = \ (V_s \ + \ V_u)$$

gebildet.

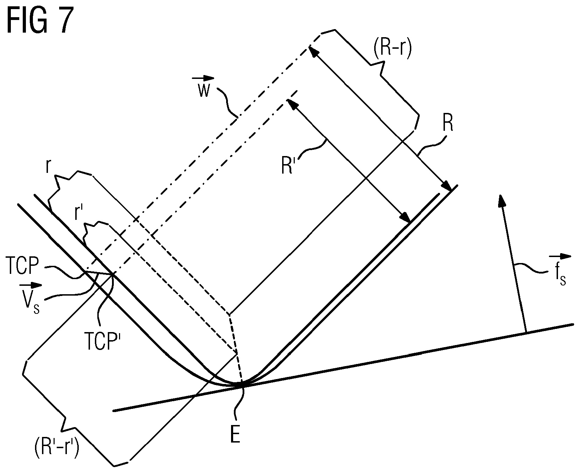

FIG 7 verdeutlicht die vorstehend beschriebenen Zusammenhänge für die Werkzeugradiuskorrektur bei dem Schaftfräser mit Eckenverrundung, wenn sowohl der Schaftradius R als auch der Verrundungsradius r geringfügig verringert sind. Der Schaftradius R des definierten Fräser und der Schaftradius R' des tatsächlich vorhandenen Fräsers unterscheiden sich um $\Delta R = R - R'$. Der Verrundungsradius r des definierten Fräsers und der Verrundungsradius r' des tatsächlich vorhandenen Fräsers unterscheiden sich um $\Delta r = r - r'$. Der Eingriffspunkt des Fräsers auf der Fräsbahn für Stirnfräsen ist mit E bezeichnet. Der erste Hilfs-Korrekturvektor $V_s$ für Stirnfräsen wird so bestimmt, dass die Werkstückbearbeitung trotz der veränderten Geometrie des Fräsers wieder an diesem Eingriffspunkt E erfolgt. In FIG 7 ist ersichtlich, dass der erste Hilfs-Korrekturvektor $V_s$ für Stirnfräsen vom Werkzeugbezugspunkt TCP des definierten Fräsers zum Werkzeugbezugspunkt TCP' des verfügbaren Fräsers zeigt.

Der zweite Hilfs-Korrekturvektor $V_u$ wird analog, wie schon anhand von FIG 6 beschrieben ist, bestimmt.

Zusammengefasst benötigt das beschriebene Verfahren zur 3D-Werkzeugradiuskorrektur die Originalkontur bzw. die Fräserbahn, Abmessungen des Fräsers, auf dessen Grundlage die Fräserbahn berechnet wurde, und die Abmessungsdifferenzen, die Fräserorientierung und die beiden Flächennormalen, nämlich die Flächennormale für die Stirnfräsen-Fläche und die Flächennormale für die Umfangsfräsen-Fläche. Diese Daten sind die Eingangsgrößen zur Bestimmung des Korrekturvektors.

Die vorstehend anhand der Ausführungsbeispiele beschriebene Bestimmung eines Korrekturvektors zur 3D-Radiuskorrektur bei gleichzeitigem Stirn- und Umfangsfräsen erlaubt eine hochpräzise und schnelle Herstellung auch mit Fräsern, die Abmessungsunterschiede gegenüber den im CAD-CAM-Prozess definierten Fräsern aufweisen. In der Praxis sind meist nur kleine Radiusänderungen gegenüber dem Normwerkzeug (Radius, mit dem das CAM-Programm gerechnet hat) zu korrigieren, die sich beispielsweise durch Verschleiß ergeben. Ein kleinerer Fräserradius lässt sich problemlos verrechnen. Bei einem größeren Radius besteht Kollisionsgefahr des Werkzeugs mit der Werkstückkontur.

**Patentansprüche**

1.  Verfahren zur 3D-Radiuskorrektur beim CNC-Fräsen mit den Schritten:

    - mittels eines NC-Programms Vorgeben einer Fräserbahn auf einem Werkstück in Form von Positionen einer Fräserspitze, wobei die Fräserbahn für einen Original-Fräser zur Herstellung einer Oberflächenkontur auf dem Werkstück berechnet wurde,
    - Vorgeben des Original-Fräsers einschließlich seiner Abmessungen (R, r), für den die Fräserbahn zur Erzeugung der Oberflächenkontur berechnet wurde,
    - Vorgeben von Abmessungsdifferenzen (ΔR, Δr) eines tatsächlich vorhandenen Fräsers, mit dem die Bearbeitung des Werkstücks erfolgen kann, zum Original-Fräser,
    - Vorgeben einer Flächennormalen ($f_s$) einer Stirnfräsen-Fläche und einer Flächennormalen ($f_u$) einer Umfangsfräsen-Fläche für jede Position der Fräserspitze,
    - Vorgeben einer Fräserorientierung ($w$), die die räumliche Orientierung der Fräserachse angibt, für jede Position der Fräserbahn,
    - für jede Position der Fräserbahn Bestimmen eines Korrekturvektors ($V$) aus der Fräserorientierung ($w$) und den Abmessungsdifferenzen des tatsächlich vorhandenen Fräsers (ΔR, Δr) und der Flächennormalen für Stirnfräsen ($f_s$) und der Flächennormalen für Umfangsfräsen ($f_u$) und
    - Bearbeiten des Werkstücks zur Herstellung der Oberflächenkontur durch gleichzeitiges Stirn- und Umfangsfräsen beim Abfahren der vom NC-Programm vorgegebenen Fräserbahn mit dem tatsächlich vorhandenen Fräser unter Korrektur der Abmessungsdifferenzen (ΔR, Δr) mit dem Korrekturvektor ($V$).

2.  Verfahren nach Anspruch 1, **dadurch gekennzeichnet, dass** ein erster Hilfs-Korrekturvektor ($V_s$) aus der Fräserorientierung ($w$) und den Abmessungsdifferenzen des tatsächlich vorhandenen Fräsers (ΔR, Δr) und der Flächennormalen für Stirnfräsen ($f_s$) gebildet wird, dass ein zweiter Hilfs-Korrekturvektor ($V_u$) aus der Fräserorientierung ($w$) und den Abmessungsdifferenzen (ΔR, Δr) des tatsächlich vorhandenen Fräsers und der Flächennormalen für Umfangsfräsen ($f_u$) gebildet wird und dass der Korrekturvektor ($V$) über eine Vektoraddition aus dem ersten Hilfs-Korrekturvektor ($f_s$) und dem zweiten Hilfs-Korrekturvektor ($V_u$) bestimmt wird.

3.  Verfahren nach Anspruch 2, **dadurch gekennzeichnet, dass** zur Bearbeitung des Werkstücks ein Kugelkopffräser verwendet wird und dass der erste Hilfs-Korrekturvektor $V_s$ aus der Werkzeugorientierung $w$, der Flächennormalen $f_s$ und der Radiusdifferenz ΔR des Kugelkopfes des Kugelkopffräsers nach dem Zusammenhang

$$V_s \;=\; (w \;-\; f_s) \cdot \Delta R,$$

der zweite Hilfs-Korrekturvektor $V_u$ aus der Flächennormalen $f_u$ und der Radiusdifferenz ΔR des Kugelkopfes des Kugelkopffräsers nach dem Zusammenhang

$$V_u = (-f_u) \cdot \Delta R$$

und der Korrekturvektor V aus dem ersten und zweiten Hilfs-Korrekturvektor $V_s$ bzw. $V_u$ nach dem Zusammenhang

$$V = (V_s + V_u)$$

bestimmt werden.

4. Verfahren nach Anspruch 2, **dadurch gekennzeichnet, dass** zur Bearbeitung des Werkstücks ein Schaftfräser mit Eckenverrundung verwendet wird, wobei die Abmessungsdifferenz nur durch die Radiusdifferenz $\Delta R$ des Schaftradius R bestimmt wird, und dass der erste Hilfs-Korrekturvektor $V_s$ aus der Werkzeugorientierung $w$, der Flächennormalen $f_s$ für Stirnfräsen und der Radiusdifferenz $\Delta R$ nach dem Zusammenhang

$$V_s = ((w \times f_s) \times w) \cdot \Delta R,$$

der zweite Hilfs-Korrekturvektor $V_u$ aus der Flächennormalen $f_u$ der Fräsbahn für Umfangsfräsen und der Radiusdifferenz $\Delta R$ nach dem Zusammenhang

$$V_u = (-f_u) \cdot \Delta R$$

und der Korrekturvektor V aus dem ersten und zweiten Hilfs-Korrekturvektor $V_s$ bzw. $V_u$ nach dem Zusammenhang

$$V = (V_s + V_u)$$

bestimmt werden.

5. Verfahren nach Anspruch 2, **dadurch gekennzeichnet, dass** zur Bearbeitung des Werkstücks ein Schaftfräser mit Eckenverrundung verwendet wird, wobei die Abmessungsdifferenz durch die Radiusdifferenz $\Delta R$ des Schaftradius R und die Radiusdifferenz $\Delta r$ des Verrundungsradius r bestimmt ist, und dass der erste Hilfs-Korrekturvektor $V_s$ aus der Werkzeugorientierung $w$ und der Flächennormalen $f_s$ für Stirnfräsen und den Radiusdifferenzen $\Delta R$ und $\Delta r$ nach dem Zusammenhang

$$V_s = ((w \times f_s) \times w) \cdot (\Delta R - \Delta r) + (w - f_s) \cdot \Delta r,$$

der zweite Hilfs-Korrekturvektor $V_u$ aus der Flächennormalen $f_u$ für Umfangsfräsen und der Radiusdifferenz $\Delta R$ nach dem Zusammenhang

$$V_u = (-f_u) \cdot \Delta R$$

und der Korrekturvektor $V$ aus dem ersten und zweiten Korrekturvektor $V_s$ bzw. $V_u$ nach dem Zusammenhang

$$V = (V_s + V_u)$$

bestimmt werden.

6. Numerisch gesteuerte Fräsmaschine mit einer Werkzeugmaschinensteuerung, die derart ausgebildet ist, eine 3D-Radius-Korrektur bei einer gleichzeitigen Fräsbearbeitung eines Werkstücks mittels Stirn- und Umfangsfräsen nach einem der Ansprüche 1 bis 5 durchzuführen.

**Claims**

1. Method for 3D radius correction in CNC milling with the steps:

    - using an NC program to predetermine a mill path on a workpiece in the form of positions of a mill cutter tip, wherein the mill path has been calculated for an original mill in order to produce a surface contour on the workpiece,
    - predetermine the original mill including its dimensions (R, r), for which the mill path has been calculated to produce the surface contour,
    - predetermine differences in dimension ($\Delta R$, $\Delta r$) of a mill which is actually available, with which the machining of the workpiece can take place, from the original mill,
    - predetermine a surface normal ($f_s$) of a face milling surface and a surface normal ($f_u$) of a circumferential milling surface for each position of the mill cutter tip,
    - predetermine a mill orientation ($w$), which specifies the spatial orientation of the mill axis, for each position of the mill path,
    - for each position of the mill path, determine a correction vector ($V$) from the mill orientation ($w$) and the differences in dimension ($\Delta R$, $\Delta r$) of the mill which is actually available and the surface normals for face milling ($f_s$) and the surface normals for circumferential milling ($f_u$) and
    - machining the workpiece in order to produce the surface contour by simultaneous face and circumferential milling when the mill which is actually available passes through the mill path predetermined by the NC program, by correcting the differences in dimension ($\Delta R$, $\Delta r$) with the correction vector ($V$).

2. Method according to claim 1, **characterised in that** a first auxiliary correction vector ($V_s$) is formed from the mill orientation ($w$) and the differences in dimension of the mill ($\Delta R$, $\Delta r$) which is actually available and the surface normals for face milling ($f_s$) is formed, that a second auxiliary correction vector ($V_u$) is formed from the mill orientation ($w$) and the differences in dimension ($\Delta R$, $\Delta r$) of the mill which is actually available and the surface normals for circumferential milling ($f_u$) and that the correction vector ($V$) is determined by way of adding a vector from the first auxiliary correction vector ($f_s$) and the second auxiliary correction vector ($V_u$).

3. Method according to claim 2, **characterised in that** a ball end mill is used to machine the workpiece and that the first auxiliary correction vector $V_s$ is determined from the tool orientation $w$, the surface normals $f_s$ and the radius difference $\Delta R$ of the ball head of the ball head mill according to the relationship

$$V_s = (w - f_s) \cdot \Delta R,$$

the second auxiliary correction vector $V_u$ from the surface normals $f_u$ and the radius difference $\Delta R$ of the ball head of the ball head mill according to the relationship

$$V_u = (-f_u) \cdot \Delta R$$

and the correction vector $V$ is determined from the first and second auxiliary correction vector $V_s$ or $V_u$ according to the relationship

$$V = (V_s + V_u).$$

4. Method according to claim 2, **characterised in that** an end mill with corner rounding is used to machine the workpiece, wherein the difference in dimension is only determined by the radius difference $\Delta R$ of the end radius R, and that the first auxiliary correction vector $V_s$ is determined from the tool orientation $w$, the surface normals $f_s$ for face milling and the radius difference $\Delta R$ according to the relationship

$$V_s = ((w \times f_s) \times w) \cdot \Delta R,$$

the second auxiliary correction vector $V_u$ is determined from the surface normals $f_u$ of the mill path for circumferential milling and the radius difference ∆R according to the relationship

$$V_u = (-f_u) \cdot \Delta R$$

and the correction vector **V** is determined from the first and second auxiliary correction vector $V_s$ or $V_u$ according to the relationship

$$V = (V_s + V_u).$$

**5.** Method according to claim 2, **characterised in that** an end mill with corner rounding is used to process the workpiece, wherein the difference in dimension is determined by the radius difference ∆R of the end radius R and the radius difference ∆r of the rounding radius r, and that the first auxiliary correction vector $V_s$ is determined from the tool orientation **w** and the surface normals $f_s$ for face milling and the radius differences ∆R and ∆r according to the relationship

$$V_s = ((w \times f_s) \times w) \cdot (\Delta R - \Delta r) + (w - f_s) \cdot \Delta r,$$

the second auxiliary correction vector $V_u$ is determined from the surface normals $f_u$ for circumferential milling and the radius difference ∆R according to the relationship

$$V_u = (-f_u) \cdot \Delta R$$

and the correction vector **V** is determined from the first and second correction vector $V_s$ or $V_u$ according to the relationship

$$V = (V_s + V_u).$$

**6.** Numerically controlled milling machine with a machine tool controller, which is embodied to carry out a 3D radius correction while simultaneously milling a workpiece using face and circumferential milling according to one of claims 1 to 5.

**Revendications**

**1.** Procédé de correction de rayon en 3D dans une fraise CNC, comprenant les stades :

- au moyen d'un programme NC, prescription d'une trajectoire de fraisage sur une pièce sous la forme de positions d'une pointe de fraise, la trajectoire de fraisage d'une fraise originale ayant été calculée pour la production d'un contour de surface sur la pièce,
- prescription de la fraise originale, y compris de ses dimensions (R, r), pour laquelle la trajectoire de la fraise a été calculée pour la production du contour de la surface,
- prescription de différences (∆R, ∆r) de dimension d'une fraise présente réellement, par laquelle l'usinage de la pièce peut s'effectuer, par rapport à la fraise originale,
- prescription d'une normale ($f_s$) à une surface frontale de fraisage et d'une normale ($f_u$) à une surface de fraisage périphérique pour chaque position de la pointe de la fraise,
- prescription d'une orientation (**w**) de fraise, qui indique l'orientation dans l'espace de l'axe de la fraise pour chaque position de la trajectoire de la fraise,
- pour chaque position de la trajectoire de la fraise, détermination d'un vecteur (**V**) de correction, à partir de l'orientation (**w**) de la fraise et des différentes de dimension entre la fraise (∆R, ∆r) présente réellement et de la normale à la surface pour un fraisage ($f_s$) frontal et de la normale à la surface pour un fraisage ($f_u$) périphérique et
- usinage de la pièce pour produire le contour de surface par fraisage en même temps, frontal et périphérique, en parcourant la trajectoire de fraisage prescrite par le programme NC avec la fraise présente réellement, en corrigeant les différences ($\Delta R$, $\Delta r$) de dimension par le facteur ($V$) de correction.

2. Procédé suivant la revendication 1, **caractérisé en ce que** l'on forme un premier vecteur ($V_s$) de correction auxiliaire à partir de l'orientation ($w$) de la fraise et des différences de dimension de la fraise ($\Delta R$, $\Delta r$) présente réellement et de la normale à la surface pour le fraisage ($f_s$) frontal, **en ce que** l'on forme un deuxième vecteur ($V_u$) de correction auxiliaire à partir de l'orientation ($w$) de la fraise et des différences ($\Delta R$, $\Delta r$) de dimension de la fraise présente réellement et de la normale à la surface pour un fraisage ($f_u$) périphérique et **en ce que** l'on détermine le vecteur ($V$) de correction par une addition vectorielle du premier vecteur ($f_s$) de correction auxiliaire et du deuxième vecteur ($V_u$) de correction auxiliaire.

3. Procédé suivant la revendication 2, **caractérisé en ce que** l'on utilise une fraise à tête sphérique pour l'usinage de la pièce et **en ce que** l'on détermine le premier vecteur $V_s$ de correction auxiliaire à partir de l'orientation $w$ de l'outil, de la normale $f_s$ à la surface et de la différence $\Delta R$ de rayon de la tête sphérique de la fraise à tête sphérique suivant la relation

$$V_s = (\; w - f_s \;) \cdot \Delta R,$$

le deuxième vecteur $V_u$ de correction auxiliaire à partir de la normale $f_u$ à la surface et de la différence $\Delta R$ de rayon de la tête de la fraise à tête sphérique suivant la relation

$$V_u = (\; -f_u \;) \cdot \Delta R$$

et le vecteur $V$ de correction à partir du premier et du deuxième vecteurs Vs et Vu de correction auxiliaire suivant la relation

$$V = (\; V_s + V_u \;).$$

4. Procédé suivant la revendication 2, **caractérisé en ce que** l'on utilise, pour l'usinage de la pièce, une fraise à queue ayant des arrondis de coin, la différence de dimension étant déterminée seulement par la différence $\Delta R$ de rayon du rayon R de la queue, et **en ce que** l'on détermine le premier vecteur $V_s$ de correction auxiliaire à partir de l'orientation $w$ de l'outil, de la normale $f_s$ à la surface pour un fraisage frontal et de la différence $\Delta R$ de rayon suivant la relation

$$V_s = (\; (\; w \times f_s \;) \times w \;) \cdot \Delta R,$$

le deuxième vecteur $V_u$ de correction auxiliaire à partir de la normale $f_u$ à la surface de la trajectoire de la fraise pour un fraisage périphérique et de la différence $\Delta R$ de rayon suivant la relation

$$V_u = (\; -f_u \;) \cdot \Delta R$$

et le vecteur $V$ de correction à partir du premier et du deuxième vecteurs $V_s$ et $V_u$ de correction auxiliaire suivant la relation

$$V = (\; V_s + V_u \;)$$

5. Procédé suivant la revendication 2, **caractérisé en ce que** l'on utilise, pour l'usinage de la pièce, une fraise à queue à arrondi de coin, la différence de dimension étant déterminée par la différence $\Delta R$ de rayon du rayon R de la queue et par la différence $\Delta R$ de rayon du rayon r d'arrondi, et **en ce que** l'on détermine le premier vecteur $V_s$ de correction auxiliaire à partir de l'orientation $w$ de l'outil et de la normale $f_s$ à la surface pour un fraisage frontal et des différences $\Delta R$ et $\Delta r$ de rayon suivant la relation

$$V_s = ( ( w \times f_s ) \times w ) . ( \Delta R - \Delta r ) + ( w - f_s ) . \Delta R,$$

le deuxième vecteur $V_u$ de correction auxiliaire à partir de la normale $f_u$ à la surface pour un fraisage périphérique et de la différence $\Delta R$ de rayon suivant la relation

$$V_u = ( -f_u ) . \Delta R$$

et le vecteur $V$ de correction à partir du premier et du deuxième vecteurs $V_s$ et $V_u$ de correction suivant la relation

$$V = ( V_s + V_u )$$

6.  Fraiseuse commandée numériquement, comprenant une commande de fraiseuse, qui est constituée, pour effectuer une correction de rayon en 3D lors d'un fraisage simultané d'une pièce, au moyen d'un fraisage frontal et périphérique suivant l'une des revendications 1 à 5.

FIG 1

```
                        ┌──────────────┐
                        │  CAD-Modell  │──╮ 10
                        └──────┬───────┘  ╯
                               │
                        ┌──────┴───────┐
                        │     CAM      │──╮ 12
                        └──────┬───────┘  ╯
                               │
                        ┌──────┴───────┐
                        │ Postprozessor│──╮ 14
                        └──────┬───────┘  ╯
                               │
                        ┌──────┴───────┐
                        │ NC-Programm  │──╮ 16
                        │┌────────────┐│  ╯
                        ││3D-Rad.-Korr.││──╮ 16A
                        │└────────────┘│  ╯
                        └──────┬───────┘
                               │
                        ┌──────┴───────┐
                        │  Steuerung   │──╮ 18
                        └──────┬───────┘  ╯
                               │
      ┌──────────────┐  ┌──────┴───────┐
 24 ╭─│ WZM-Magazin  │──│     WZM      │──╮ 20
      └──────────────┘  └──────┬───────┘  ╯
                               │
                        ┌──────┴───────┐
                        │  Bearbeitung │──╮ 22
                        │  Werkstück   │  ╯
                        └──────────────┘
```

# FIG 2

```
                        ┌──────────┐
                        │  Kontur  │ ～ 30
                        └──────────┘
  34                                                                    31
┌─────────┐        ┌─────────┐        ┌─────────┐        ┌──────────┐
│   →     │        │   →     │        │   →     │        │ Fräser-  │
│   fₛ    │        │   w     │ ～ 32  │   fᵤ    │ ～ 36  │  bahn    │
└─────────┘        └─────────┘        └─────────┘        └──────────┘

                   ┌──────────┐
                   │  R, ΔR   │ ～ 38
                   │  r, Δr   │
                   └──────────┘

┌─────────┐                            ┌─────────┐
│   →     │                            │   →     │
│   Vₛ    │ ～ 40                      │   Vᵤ    │ ～ 42
└─────────┘                            └─────────┘

                   ┌─────────┐
                   │   →     │
                   │   V     │ ～ 44
                   └─────────┘

   24    ┌─────────┐   ┌─────────┐
  ～     │         │───│         │ ～ 20
        └─────────┘   └─────────┘
                      ┌─────────┐
                      │         │ ～ 22
                      └─────────┘
```

FIG 3

FIG 4

## FIG 5

## FIG 6

FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10330828 A1